Europäisches Patentamt

European Patent Office

Office européen des brevets

(11) Publication number: **0 119 329**
**A1**

## EUROPEAN PATENT APPLICATION

(21) Application number: 83201827.9

(22) Date of filing: 21.12.83

(51) Int. Cl.³: **A 23 C 9/12,** A 23 C 15/12,
**A 23 D 3/00**

(30) Priority: 28.12.82 NL 8205012

(43) Date of publication of application: 26.09.84
**Bulletin 84/39**

(84) Designated Contracting States: **AT BE CH DE FR GB IT
LI NL SE**

(71) Applicant: **UNILEVER NV, Burgemeester
s'Jacobplein 1 P.O. Box 760, NL-3000 DK Rotterdam (NL)**
(84) Designated Contracting States: **BE CH DE FR IT LI NL
SE AT**

(71) Applicant: **UNILEVER PLC, Unilever House Blackfriars P
O Box 68, London EC4P 4BQ (GB)**
(84) Designated Contracting States: **GB**

(72) Inventor: **Lelieveld, Hubertus L.M., Spechtstraat 110,
NL-3145 XM Maassluis (NL)**

(74) Representative: **van der Toorren, Johannes, Drs. et al,
UNILEVER N.V. Patent Division Postbus 137, NL-3130 AC
Vlaardingen (NL)**

(54) **Treatment of milk products with lactic acid bacteria and lactose-splitting enzymes, and use of the resulting products in preparing foodstuffs.**

(57) A process for the treatment of milk products with lactic acid bacteria and lactose-splitting enzymes is provided, having the characterizing feature that both the fermentation and the lactose-hydrolysis are carried out continuously, preferably the one step after the other. In this way an economically attractive process is obtained for making milk products having a very low lactose content, which are beneficial for people who suffer from lactose malabsorption. The fermented milk products can be incorporated in dessert products such as quark, pudding and yoghurt or in water-and-oil emulsions suitable for spreading on bread, such as margarine, low-fat spreads and butter.

# TREATMENT OF MILK PRODUCTS WITH LACTIC ACID BACTERIA AND LACTOSE-SPLITTING ENZYMES, AND USE OF THE RESULTING PRODUCTS IN PREPARING FOODSTUFFS

The invention relates to a process for the treatment of milk or milk products with the aid of lactic acid bacteria, which, during the fermentation, partly convert lactose and/or glucose and/or galactose into lactic acid, and lactose-splitting enzymes, which convert lactose into glucose and galactose. A similar process is known from Cultured Dairy Products Journal (May 1982), pages 18, 19 and 22. According to this publication, lactose-splitting enzyme was added simultaneously with a yoghurt culture to a yoghurt milk, whereafter the mix was filled into beakers and incubated at 42°C until the right degree of acidity had been reached. A drawback of this process is that the enzyme, inactivated or otherwise, remains in the product, as a result of which a relatively large amount of enzyme is necessary.

If the work is done with immobilized enzymes, as has also been proposed, it is true that less enzyme is necessary, but then extra processing apparatus is often necessary, which usually makes the process fairly expensive. As a consequence of this, the use of these enzymes for the hydrolysis of lactose has, up to now, scarcely appeared to be commercially attractive.

The present invention is based on the discovery that hydrolysis of lactose with immobilized enzymes becomes attractive if this hydrolysis is combined with continuous fermentation of milk or milk products. Accordingly, the invention provides a process for the treatment of milk or milk products with the aid of lactic acid bacteria, which, during the fermentation, partly convert lactose and/or glucose and/or galactose into lactic acid, and with lactose-splitting enzymes, which convert

0119329

lactose into glucose and galactose, which is characterized in that both the lactose hydrolysis and the fermentation are carried out continuously. The continuous fermentation of milk and milk products is in itself known; see e.g. Process Biochemistry (June 1976), pages 39-40, and European Patent Application 82581. The same applies to the use of immobilized lactase for the hydrolysis of lactose; see e.g. European Patent Application 26 672.

Continuous hydrolysis of lactose can be carried out successfully with the aid of immobilized lactase, also known as beta-galactosidase. Although the immobilized lactase can be introduced into the fermentor in which the milk or the milk product is fermented continuously, it is preferred that the milk or milk product is passed through a column filled with immobilized lactase either before or after the continuous fermentation which is carried out in a fermentor at a constant pH. Thus, a preferred embodiment of the present invention is a process in which milk or a milk product is passed through one or several columns filled with immobilized beta-galactosidase and subsequently passed through one or several fermentors in which the continuous fermentation is carried out. Another embodiment of the present invention is a process in which milk or a milk product is first passed through one or several fermentors in which the continuous fermentation is carried out and subsequently the fermented product is passed through one or several columns filled with immobilized beta-galactosidase.

By using one or several columns with immobilized lactase, which columns can be arranged both parallel and in series, the degree of hydrolysis can be adjusted better than if the hydrolysis were to be carried out in the same fermentor in which the fermentation takes place. In certain cases it is more favourable to carry out the continuous fermentation in several fermentors, e.g. in a first fermentor at pH not lower than 5.1 and in a second fermentor at pH in the range of 5.0 to 4.0.

In a preferred process the milk or the milk product is first brought into contact with immobilized lactase, whereafter the hydrolysed milk is slowly added to the fermentor in which the milk is continuously fermented. Through the slow rate of transport of the milk or the milk product a smaller amount of enzyme and apparatus of smaller dimensions will suffice than with the use of a non-continuous fermentation and hydrolysis. Moreover, with the preferred process fewer changes of temperature are necessary, which gives a saving of energy. The milk can be pasteurized before as well as after the hydrolysis. Since, in the dairy factory, milk is pasteurized as a rule after arrival, it is preferable that the product to be treated should be pasteurized before the hydrolysis. Moreover, this prevents the possible infection of the column containing immobilized lactase.

Full milk as well as half-fat milk or skim milk can be used as the milk; buttermilk and whey are mentioned as as suitable milk products.

The invention also provides a fermented milk or milk product in which the lactose content is below 0.5% by weight, preferably below 0.05% by weight, and more preferably below 0.01% by weight.

Although such products can be made in several ways, e.g. by using repeated ultrafiltration or diafiltration, by which processes lactose is removed, preferably a fermented milk or milk product is prepared by a process according to the invention as described before and in claims 1 to 4.

0119329

Such products with low lactose content are beneficial for people who suffer from lactose mal-absorption or for lactose-intolerant people.

These fermented low-lactose products can advantageously be used in a process for preparing dessert products, such as quark, pudding and yoghurt, by incorporating the fermented low-lactose products in said dessert products instead of the usual milk products containing an appreciable amount of lactose, often in the order of 1-4% by weight. The additional advantage is that, besides being beneficial for people who have difficulty with lactose-containing foodstuffs, the dessert products need less added sugars because the glucose and galactose mixture formed by the hydrolysis of lactose has a greater sweetening power than lactose.

The fermented low-lactose products can also be used in a process for preparing water-and-oil emulsions suitable for spreading on bread, such as margarine, low-fat spreads, butter and such-like, by incorporating the fermented low-lactose products in said water-and-oil emulsions instead of the usual fermented milk and/or whey used in the preparation of margarine, butter and the like.

Finally, the invention provides dessert products and water-and-oil emulsions as described above with low to very low lactose contents and preferably prepared by a process as described above and in claims 7 or 8, respectively.

The invention will now be explained by the following example.

Example I

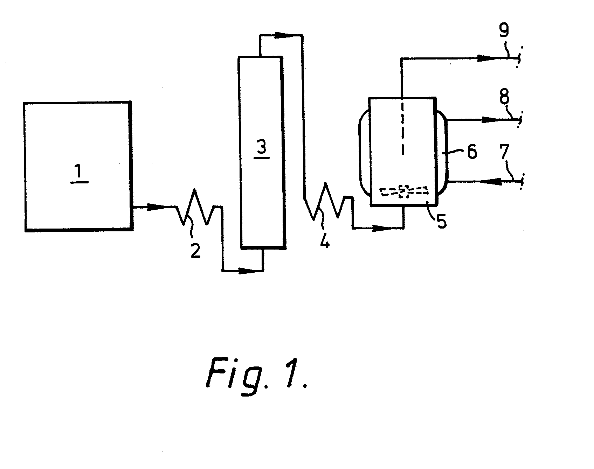

The continuous hydrolysis of lactose and the continuous fermentation are described with reference to the arrangement illustrated in Fig. 1.

Pasteurized milk is led from a supply tank (1) through a heat exchanger (2) to a column (3) in which immobilized lactase is present on a carrier. In this column the continuous hydrolysis of lactose is carried out. The milk with hydrolysed lactose flowing out of the column is conducted via a heat exchanger (4) to a fermentor (5) in which the continuous fermentation takes place. This fermentor (5) is provided with a heat exchanger (6) having supply line (7) and discharge line (8) so as to be able to regulate the temperature in the fermentor. The fermented milk product flowing out of the fermentor (5) is discharged at (9) for further processing or packaging.

It was found that the amount of enzyme required per litre per hour at 40°C, pH 6.7 and 90% hydrolysis is about 8,000 lactase units, based on a hydrolysis reaction time of one hour. Because of the short hydrolysis time of one hour, microbial growth barely occurs, so that re-pasteurization after the hydrolysis is not necessary.

Taking into consideration a 50% loss of enzyme activity during the immobilization and a half-value time of a month, 32,000 lactase units have to be immobilized for treating one litre of milk per hour, so that after a month there are still 8,000 lactase units present. With a rate of flow of 600 l per hour, $1.92 \times 10^7$ lactase units are necessary. Starting from the possibility of immobilizing about 100 lactase units per gram of carrier, 193 kg carrier with immobilized lactase is needed. After a month this has to be renewed. For a rate of flow of 600 l per hour the reaction can be carried out with a column having a volume of 1 $m^3$

(600 l useful contents plus volume of carrier) in continuous use, together with a fermentor having a volume of 1.5 $m^3$ and a supply tank of for example 12 $m^3$.

The capacities of the heat exchangers (2), (4) and (6) must be such that the milk coming out of the supply tank (1) with a temperature of e.g. 7°C can be warmed up to e.g. 40°C in heat exchanger (2), whereafter the milk flowing out of the column (3) into heat exchanger (4) can be cooled to e.g. 22-25°C if the continuous fermentation takes place in that temperature range.

In this manner 600 l milk per hour, or a good 14 $m^3$ per day can be treated, or about 3,750 $m^3$ per year, for which $12 \times 1.92 \times 10^7 = 2.3 \times 10^8$ lactase units per year are necessary, based on monthly replenishment of the column.

## Comparative example

If free lactase were to be added to the milk or the milk product, the amount would have to be as small as possible on account of the expense. For example, for hydrolysis of up to 90% of the lactose at 40°C and pH 6.7, one could start from 2,000 lactase units per litre of milk as opposed to the 8,000 lactase units per litre of milk mentioned in the example. However, the residence time would then be about four hours, as a result of which bacteria, or spores in the case of well pasteurized milk, can grow to a concentration of about $10^5$ per ml (depending on the initial concentration). For this reason, after such a hydrolysis, repasteurization is necessary prior to fermenting the milk.

For the hydrolysis of about 3,700 $m^3$ milk per year $2,000 \times 3,750 \times 10^3 = 7.5 \times 10^9$ lactase units per

year are then necessary, which is a good 30 times as much as according to the process given in the example. If the amount of lactase per litre of milk were to be reduced further, then the residence time would have to be proportionately longer, with the consequence that the growth of bacteria can increase to such an extent that the milk can prematurely turn sour.

## CLAIMS

1. A process for the treatment of milk or milk products with the aid of lactic acid bacteria, which, during the fermentation, partly convert lactose and/or glucose and/or galactose into lactic acid, and with lactose-splitting enzymes, which convert lactose into glucose and galactose, characterized in that both the lactose hydrolysis and the fermentation are carried out con-tinuously.

2. A process according to claim 1, characterized in that milk or a milk product is passed through one or several columns filled with immobilized beta-galactosidase and subsequently passed through one or several fermentors in which the continuous fermentation is carried out.

3. A process according to claim 1, characterized in that milk or a milk product is first passed through one or several fermentors in which the continuous fermentation is carried out and subsequently the fermented product is passed through one or several columns filled with immobilized beta-galactosidase.

4. A process according to any one of claims 1 to 3, characterized in that the milk is pasteurized before and/or after the hydrolysis.

5. A fermented milk or milk product in which the lactose content is below 0.5% by weight, preferably below 0.05% by weight.

6. A fermented milk or milk product according to claim 5, which is prepared by a process as claimed in any one of claims 1-4.

() 31·5 (P.)

0119329

7.      A process for preparing dessert products, such as quark, pudding and yoghurt, characterized in that a fermented milk or milk product according to claim 5 or 6 is incorporated in said dessert product.

8.      A process for preparing a water-and-oil emulsion suitable for spreading on bread, such as margarine, low-fat spreads and butter, characterized in that a fermented milk or milk product according to claim 5 or 6 is incorporated in said water-and-oil emulsion.

9.      A dessert product prepared by a process according to claim 7.

10.     A water-and-oil emulsion prepared by a process according to claim 8.

CLAIMS (Austria)

1. A process for the treatment of milk or milk products with the aid of lactic acid bacteria, which, during the fermentation, partly convert lactose and/or glucose and/or galactose into lactic acid, and with lactose-splitting enzymes, which convert lactose into glucose and galactose, characterized in that both the lactose hydrolysis and the fermentation are carried out continuously.

2. A process according to claim 1, characterized in that milk or a milk product is passed through one or several columns filled with immobilized beta-galactosidase and subsequently passed through one or several fermentors in which the continuous fermentation is carried out.

3. A process according to claim 1, characterized in that milk or a milk product is first passed through one or several fermentors in which the continuous fermentation is carried out and subsequently the fermented product is passed through one or several columns filled with immobilized beta-galactosidase.

4. A process according to any one of claims 1 to 3, characterized in that the milk is pasteurized before and/or after the hydrolysis.

5. A process for preparing a fermented milk or milk product, characterized in that the lactose content is decreased to below 0.5% by weight, preferably below 0.05% by weight.

6. A process according to claim 5, characterized in that the lactose content is decreased by a process as claimed in any one of claims 1-4.

7.        A process for preparing dessert products, such as quark, pudding and yoghurt, characterized in that a fermented milk or milk product according to claim 5 or 6 is incorporated in said dessert product.

8.        A process for preparing a water-and-oil emulsion suitable for spreading on bread, such as margarine, low-fat spreads and butter, characterized in that a fermented milk or milk product according to claim 5 or 6 is incorporated in said water-and-oil emulsion.

0119329

*Fig. 1.*

European Patent
Office

**EUROPEAN SEARCH REPORT**

0119329

Application number

EP 83 20 1827

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | ANNALES DE LA NUTRITION ET DE L'ALIMENTATION, vol. 32, 1978, pages 657-669; L.ROGER et al.: "Hydrolyse du lastose contenu dans l'ultrafiltrat de lait ou de lactosérum en réacteur enzymatique à membrane". *Pages 663-664; page 666, paragraph 3* | 1,2,5, 6 | A 23 C 9/12 A 23 C 15/12 A 23 D 3/00 |
| D,Y | PROCESS BIOCHEMISTRY, vol. 11, no. 5, June 1976, pages 39-40; H.L.M.LELIEVELD: "Continuous fermentation in yoghurt manufacture". *Pages 39,40* | 1,2,5, 6 | |
| Y | J.MILK FOOD TECHNOLOGY, vol. 36, no. 1, 1973, pages 31-33; J.H.WOYCHIK et al.: "Lactose hydrolysis in milk and milk products by bound fungal beta-galactosidase". *Pages 31-33* | 1,2,4, 5,6 | **TECHNICAL FIELDS SEARCHED (Int. Cl. ³)** A 23 C |
| Y | FERMENTED FRESH MILK PRODUCTS, vol. 1, 1978, pages 101,310-318, Technical Dairy Publ. House, Copenhagen (DK); J.Lj.RASIC et al.: "Yoghurt, Scientific grounds, Technology, Manufacture and preparations". *Pages 101,313,314,316,317* | 1,2,4, 5,6 | |

--- -/-

The present search report has been drawn up for all claims

| Place of search THE HAGUE | Date of completion of the search 05-04-1984 | Examiner DESMEDT G.R.A. |
|---|---|---|

European Patent
Office

**EUROPEAN SEARCH REPORT**

0119329

EP  83  20  1827

Page  2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,A | CULTURED DAIRY PRODUCTS JOURNAL, vol. 17, no. 2, May 1982, pages 18,19,22; D.DARIANI: "Manufacture of low lactose yogurt by sumultaneous lactose hydrolysis and bacterial fermentation". *Page 19* | 1 | |
| A | FR-A-2 409 010  (E.ARIES) | | |
| A | DE-A-2 853 157  (F.RUINER) *Example 2* | 1 | |
| A | FR-A-2 406 393  (E.ARIES) *Claims 1,6; example 4* | 1,2 | |

TECHNICAL FIELDS
SEARCHED (Int. Cl. 3)

The present search report has been drawn up for all claims

| Place of search | Date of completion of the search | Examiner |
|---|---|---|
| THE HAGUE | 05-04-1984 | DESMEDT G.R.A. |